# EUROPEAN PATENT APPLICATION

(11) **EP 4 730 608 A1**
(43) Date of publication of application: **22.04.2026**
(21) Application number: 25208916.4
(22) Date of filing: 15.10.2025
(51) Int. Cl.: H02J 9/06, H02J 3/36, H02J 11/00

(54) **AUXILIARY REDUNDANT POWER SUPPLY FOR AN ENERGY STORAGE SYSTEM AND ENERGY STORAGE SYSTEM**

(30) Priority: 18.10.2024 LU 508591
(71) Applicant: Skeleton Technologies GmbH, 04420 Markranstädt (DE)
(72) Inventor: Iegorov, Mykola, 13623 Tallinn (EE); Raska, Martin, 69310 Laatsi (EE); Sinijärv, Tanel, 76916 Harku vald (EE)
(74) Representative: KASTEL Patentanwälte PartG mbB

(57) **Abstract**

In order to allow providing improved apparatus for HVDC systems, the invention proposes an auxiliary power supply (30) for an energy storage rack (22) of a high-voltage DC (HVDC) system, the power supply comprising: at least one AC power supply branch (54) that includes input terminals (38), transfer terminals (40) and a low voltage (LV) transformer (42), wherein the LV transformer (42) has an input branch (44) that is configured for receiving AC electrical power from the input terminals (38), the LV transformer (42) has a transfer branch (46) that is configured for transferring the AC electrical power to the transfer terminals (40), and the LV transformer (42) has a supply branch (48) that is configured for transforming the received AC electrical power to a lower voltage in extra low voltage (ELV) range for supplying a control unit (26); at least one DC power supply branch (60) that includes an LV DC power source (62) that is configured for supplying DC electrical power to the control unit (26).

## Description

The invention relates to an auxiliary power supply. The invention further relates to an energy storage rack in an energy storage system and an energy storage system.

In this disclosure the terms "high voltage" (HV), "low voltage" (LV) and "extra low voltage" (ELV) follow the generally accepted definition of the International Electrical Commission according to IEC 61140:2016 "Protection against electric shock - Common aspects for installation and equipment". Thus, the term "high voltage" designates voltages above 1000 V for alternating current (AC) and above 1500 V for direct current (DC), the term "low voltage" designates voltages smaller than or equal to 1000 V for AC and smaller than or equal to 1500 V for DC, and the term "extra low voltage" designates voltages smaller than or equal to 50 V for AC and smaller than or equal to 120 V for DC.

US 10 992 219 B2 discloses a power conversion device with a plurality of cascaded converter cells. In each of the converter cells, each of a plurality of arms forming a bridge circuit is provided with a plurality of semiconductor switching elements in parallel. A drive controller of each of the converter cells is configured to, when none of a plurality of predetermined abnormality modes is detected, control the bridge circuit in accordance with an externally provided command. The drive controller is configured to, when at least one of the plurality of abnormality modes is detected, turn on all semiconductor switching elements provided in at least one of the plurality of arms forming the bridge circuit, to thereby establish a short circuit between first and second input/output nodes.

Such power converters can be used in high-voltage direct current (HVDC) systems for stabilizing the system voltage during high power demand. The power converter includes critical controls, monitoring and actuating circuits. These circuits generally require low-voltage DC power to operate and provide the smooth functioning of the power converter. As the HVDC comprises high DC voltages, it is difficult to supply the low voltage DC power to this circuitry. Therefore, there is a need for a power supply that is capable of a sufficient isolation between the different DC voltage circuits that has easy maintenance and is capable of reliably supplying the critical controller.

It is the object of the invention to provide improved apparatus for HVDC systems. The object is achieved by the subject-matter of the independent claims. Preferred embodiments are subject-matter of the dependent claims.

The invention provides an auxiliary power supply for an energy storage rack (sometimes referred to as ESS rack) of a high-voltage DC (HVDC) system. The HVDC system is used for static synchronous compensation (STATCOM), e.g., in a substation for power transmission or distribution. The auxiliary power supply can be included in the energy storage racks that are part of the HVDC system to supply local controls of the energy storage rack with electricity.

The power supply comprises at least one AC power supply branch and at least one DC power supply branch. The AC part is typically supplied from a low voltage grid using an isolating transformer. The isolating transformer is preferably isolated for high-voltage. A supply cable called the auxiliary feeder provides electrical power to the power supply. The auxiliary feed is also isolated for high-voltage.

The DC part can be more flexible and may tap into an energy storage, such as a battery or supercapacitors. It is also possible to have other DC power source, such as photovoltaic modules.

The at least one AC power supply branch includes input terminals, transfer terminals and a low voltage (LV) transformer, wherein the LV transformer has an input branch that is configured for receiving AC electrical power from the input terminals. The LV transformer has a transfer branch that is configured for transferring the AC electrical power to the transfer terminals. The input terminals can be directly connected to the auxiliary feeder or the isolating transformer, respectively, or to transfer terminals of another power supply in the system. Thus, the power can be routed from one auxiliary power supply to the next, until all power supplies are connected to a low voltage grid, for example.

The LV transformer has a supply branch that is configured for transforming the received AC electrical power to a lower voltage in extra low voltage (ELV) range for supplying a control unit. The supply branch can tap electrical power from the input/transfer branches. The supply branch is inductively coupled and preferably has a higher equivalent impedance than input and transfer branches. Thus, a fault on the supply branch does not cancel the power exchange between the input and transfer branches.

The at least one DC power supply branch includes an LV DC power source that is configured for supplying DC electrical power to the control unit. The LV DC power source is preferably used, if the AC power branch for some reason cannot supply the necessary electrical power.

Preferably, the auxiliary power supply further comprises a power supply controller that is configured for switching between each AC power supply branch and each DC power supply branch in response to receiving a control signal. The control signal may come from different sources or levels. For example, if some fault condition occurs, the control signal may be generated automatically by some monitoring device. In case of maintenance, the control signal may be generated manually. It is also possible that the control signal comes from a system level controller. Preferably, there is a switching state, in which either the AC power supply branch or the DC power supply branch provide electrical energy. It is also possible to have a switching state, in which both branches supply electrical energy. A further switching state can be a state, where none of the AC power supply branch and the DC power supply branch provide electrical energy.

Preferably, the AC power supply branch includes a blocking element that prevents electrical current from flowing from any of the AC and DC power supply branches into the respective AC power supply branch. This is particularly helpful, when the branches supply electrical energy at the same time. The blocking element, such as a diode or an equivalent circuit, prevents current from flowing in the "wrong direction", i.e. from the power supply towards the grid instead of towards the power supply. Preferably, the blocking element includes a diode.

Preferably, the DC power supply branch includes a blocking element that prevents electrical current from flowing from any of the AC and DC power supply branches into the respective DC power supply branch. For the DC power supply the blocking element is also preferably a diode. The blocking element again prevents the current from flowing in the "wrong direction", i.e. from the power supply to the respective DC source, be it a batter, supercapacitor, DC generator or photovoltaic module, for example. Preferably, the blocking element includes a diode.

Preferably, the LV transformer includes a primary winding and a secondary winding that are inductively coupled to each other such that one of the primary winding and the secondary winding is part of the input branch and the other of the primary winding and the secondary winding is part of the transfer branch. The windings allow for galvanic isolation between the input branch and the output branch, of the auxiliary power supply. If multiple power supplies are connected in series, each power supply is galvanically isolated from the power supply at its input and its transfer. The auxiliary power supply can be galvanically isolated from the low voltage grid.

Preferably, the LV transformer includes a supply winding that is part of the supply branch and inductively coupled to the primary winding and/or the secondary winding, and the supply winding is configured for transforming the AC electrical power received from the primary and/or secondary windings to a lower voltage that is suitable for supplying a control unit with DC electrical power in ELV range. The supply winding is for supplying power to the local controller of the ESS rack. The supply winding taps off of the electrical power that is transferred through the LV transformer.

The windings may be wound on a common transformer core. The windings are preferably electrically isolated from each other.

Preferably, the supply branch is referenced to the same potential as either the input branch or the transfer branch. With the reference of the branches on the same potential an LV isolation within the auxiliary power supply (and the ESS rack it can be used in ) is possible.

Preferably, either the input branch is galvanically isolated from the transfer branch and the supply branch or wherein the transfer branch is galvanically isolated from the input branch and the supply branch. This configurations ensure that each auxiliary power supply of a series connection has its own reference, thus, better avoiding a risk to the LV isolation.

Preferably, the AC power supply branch includes an AC-DC converter that is electrically connected to the LV transformer to generate DC electrical power to supply the control unit. Preferably, the AC-DC converter is electrically connected to the supply branch. The AC-DC converter rectifies the AC power supplied to control units for power supply. The AC-DC converter may be an active rectifier or a passive rectifier.

Preferably, the AC-DC converter is electrically connected to the supply winding. The AC-DC converter is supplied by the LV transformer using the supply winding. Consequently, if there was a fault condition somewhere in that circuit, the main line transferring the power between adjacent auxiliary power supplies can be avoided.

Preferably, the DC power supply branch includes a DC-DC converter that is electrically coupled to the LV DC power source to generate DC electrical power to supply the control unit. The DC-DC converter allows an adaption of the DC electrical power supply to the voltage that is typically needed by the control unit. Thus, a wider variety of LV DC power supplies can be used.

Preferably, the LV DC power source includes an energy storage. In this advantageous configuration some independent energy storage is used as the LV DC power source. This may be a battery, supercapacitor storage or other type of storage.

Preferably, the LV DC power source includes at least one photovoltaic module. It is particularly advantageous to use a photovoltaic module for generating LV DC power that is isolated from high-voltage. In fact, in a typical scenario, the lighting system of the room is sufficient to power the photovoltaic module.

Preferably, the LV DC power source includes a DC power generator. The DC power generator may be some emergency generator on site that can be activated during emergency conditions, such as LV grid failure, for example.

Preferably, the input branch and the transfer branch are cooperatively configured to generate a voltage increase of the AC electric power, so as to compensate a voltage drop occurring due to electrical losses. The transfer of the electric power between auxiliary power supplies causes a voltage drop due to resistance and tapping of the electric power to supply the control unit. Thus, it is advantageous to not have a 1:1 ratio for the LV transformer but rather a slightly higher ratio of up to 1:1.2 or up to 1:1.5 to compensate for that voltage drop.

Preferably, any of the input branch and the transfer branch are configured for adjusting the voltage increase. The ratio for compensation is preferably adjustable so that the whole system can be adapted to the different voltage drops that can occur. The ratio can be adjusted continuously or in discrete steps depending on the type of the LV transformer. The adjustment is preferably made by a higher-level control unit, e.g., system level.

The invention provides an energy storage rack for a HVDC system, the energy storage rack comprising a preferred auxiliary power supply; an energy storage configured for storing electrical energy; and a control unit configured for controlling operation of the energy storage, wherein the AC power supply branch and the DC power supply branch are electrically connected to the control unit to supply electrical power. The auxiliary power supply supplies the control unit with electricity from the LV grid and the DC power supply. Thus, in case one of the power supplies fails, the control unit is still powered via the remaining power supplies. It should be noted that there can be several independent AC and DC branches to increase redundancy in the system.

Preferably, the power supply controller is part of the control unit. The power supply control unit can be separate, but is preferably part of the control unit for the ESS rack.

Preferably, the LV DC power source includes the energy storage. The ESS rack includes an energy storage in the correct LV voltage range so that it can be used as the LV DC power source. Thus, the energy storage serves the purposes of redundant power supply for the control unit and power supply for STATCOM.

Preferably, each blocking element is arranged between the LV transformer and the control unit. Preferably, each blocking element is arranged between the AC-DC converter and the control unit. Preferably, each blocking element is arranged between the DC power source and the control unit. Preferably, each blocking element is arranged between the DC-DC converter and the control unit. The blocking elements prevent cross-currents between the different power source in the "wrong direction".

Preferably, the supply branch is electrically connected to the control unit. Preferably, the supply branch is electrically connected to the control unit via the AC-DC converter. The control unit is supplied via the LV transformer and can therefore be galvanically isolated form the LV grid and other ESS racks.

Preferably, the energy storage rack further comprises a frame and/or housing made of electrically conductive material and the supply branch is referenced to the same potential as either the input branch or the transfer branch via the frame and/or housing. With this configuration the ESS rack has its own reference potential that is such that a demanding HV isolation within the ESS rack can be avoided. The ESS rack may, however, be isolated with reference to ground.

The invention provides an energy storage system (ESS) for a high-voltage DC circuit, comprising a supply transformer; and a plurality of preferred energy storage racks, whose energy storages are connected in series to collectively form an HVDC energy storage, wherein the auxiliary power supplies are electrically connected in series. The ESS serves for STATCOM. This is generally needed in HVDC circuits that are used in substations, for example. The HVDC system may also be used for transmitting large amounts of energy from a source, such as offshore wind parks to suitable consumers, e.g., factories. Such ESS can become necessary to compensate for load peaks caused by the consumers and/or sources.

The load peaks may occur at inference time and typically cannot be responded to in time by typical grids. The ESS provides a string of energy storages, preferably supercapacitors, that are low voltage. The strings are connected in series until the typical voltage of the HVDC system is reached. Thus each ESS rack in the ESS has a low voltage and has lower requirements regarding electrical isolation.

Preferably, at least one of the energy storage racks is directly electrically connected to the supply transformer via its input terminals and to one other energy storage rack via its transfer terminals. The ESS racks are connected in series with their energy storage to increase the voltage. Furthermore, the auxiliary power supplies of the ESS racks are connected in series likewise. However, the power supplies are connected to the LV grid, while the energy storage is connected to the HVDC part. It is possible, to connect a substantial amount of ESS racks in this manner. A typical application may have 20 to 50 ESS racks connected in series. With this configuration, all ESS racks can be supplied by the auxiliary power supply with ease.

Preferably, at least one of the energy storage racks is electrically connected via its transfer terminals to the input terminals of one other energy storage rack. Preferably one or two ESS racks are connected to the LV grid for power supply. Preferably, the remaining ESS racks are arranged symmetrically from a middle point between those two ESS racks to maximize redundancy and safety.

In some embodiments the power supply is a multi-source auxiliary power supply that can provide highly reliable auxiliary power. The auxiliary power may be transmitted through multiple series transformers for each ESS rack of a large energy storage system (ESS).

In some embodiments the multi-source options of the auxiliary power supply comprise a low voltage grid, photovoltaics, and a self-supply circuit, In other words a dedicated auxiliary self-supply circuit can be installed in each ESS rack, wherein the self-supply circuit can take power from the rack energy storage, e.g., super capacitor cells. The circuit may convert the energy taken from the energy storage to a stable low voltage by means of DC/DC converter, and subsequently feed this auxiliary power to the local controls in the ESS rack.

In some embodiments the proposed circuit arrangement comprises a dedicated multi-winding transformer for each ESS rack.

In some embodiments a three-winding transformer ensures the uninterrupted flow of auxiliary power in a series connection, even under short circuit conditions in any of the ESS racks. In some embodiments only the third winding is connected to the respective ESS rack and the other two windings establish a series connection between adjacent ESS racks.

In some embodiments multi-source power supplies and the dedicated three-winding transformer can provide effective galvanic isolation for each ESS rack resulting in increased redundancy.

In some embodiments the multi-source power supplies can mitigate common case failure and ensure uninterrupted high-voltage DC (HVDC) operations.

In some embodiments the auxiliary circuit is electrically referenced in every rack; thus the electrical potential of the auxiliary circuit is prevented from floating and does not pose a risk for low voltage insulation in every rack.

It is an idea to provide an auxiliary power supply for HVDC systems, especially advanced STATCOM or reactive compensation power systems. This power supply can provide auxiliary power to each ESS rack from huge energy storage systems. The ESS rack is preferably supercapacitor-based. The auxiliary power supply is able to receive low-voltage power from multiple power sources like different types of auxiliary power sources, transformers, and self-supply or photovoltaic.

The power supply serves as a multi-source auxiliary power supply that can provide highly reliable auxiliary power that can transit multiple series transformers for each ESS rack of large DC energy storage systems with increased redundancy with fewer isolation transformers. The disclosed circuit arrangement allows for effective galvanic isolation between the auxiliary power supply and the HVDC energy storage system. The auxiliary power supply can also have a self-powered power supply that takes energy from the ESS rack itself and converts it into low-voltage DC by means of a DC/DC converter and provides this as auxiliary power.

Each unit of a high voltage energy system typically comprises critical controlling, monitoring and actuating circuits. Typical functions include charging, discharging, and bypassing energy storage modules in case of fault conditions or for maintenance reasons.

These circuits require low-voltage DC power to operate and provide the smooth functioning of high-voltage energy storage racks. As the high voltage energy storage system comprises high DC voltages, it is difficult to supply the low voltage DC power to this circuitry directly. The disclosed ideas allow for a low-voltage DC power supply arrangement that cannot only provide low-voltage DC power to these circuits but is also able to provide critical isolation from the high-voltage DC energy storage system.

With the disclosed configuration it is possible to reduce or even avoid the need for high voltage isolation in the auxiliary power system. This also allows for a significant cost reduction. Furthermore, this system is able to provide sufficient auxiliary power in the tens of watts regime.

The concept is based on the use of basically ideally only one HV isolated transformer for the ESS HV string and a LV multi-winding transformer in each ESS rack. This configurations uses simpler components which can improve maintenance of the whole system. Also the system can be installed easier and in a more economical manner. In some embodiments the transformer has a short-circuit proof transformer design which further increases reliability and safety. The multi-winding transformer - instead of a 1:1 ratio - may have voltage taps which allow for a sufficient increase in order to compensate for voltage drop in the system.

Another advantage is that target availability and redundancy for ESS rack auxiliary supply can be achieved much easier by combining different types of auxiliary power sources, transformers, and self-supply or photovoltaic. Having different types of sources can mitigate the risk of common cause failure. This can further improve reliability of the entire distributed system. This combination provides further options of economical design, where one power source can be designed to rated power and another source can have a lower level (service mode) for rack controls.

An ESS rack is generally a low voltage assembly of energy storage components and typically a building block for obtaining a high voltage ESS that is used in STATCOM with HVDC bus voltage in the range of typically 30...100 kV. It should be noted that higher voltages are possible.

Each ESS rack has an auxiliary power supply to supply local controls. The ESS rack local controls are electrically referenced to rack main DC voltage, so when the auxiliary power source is a low voltage grid, it shall be an isolation level not lower than high voltage ESS system voltage. Also, auxiliary supply feeders of different racks in high voltage string shall be isolated according to the voltage difference between racks. ESS rack auxiliary power consumption can be safely assumed in the range of tens of watts. The power consumption is ideally kept below ten watts or even less.

The disclosed apparatus can provide system-level voltage isolation between low voltage grid and auxiliary feeder with means of an HV isolated transformer allocated for every ESS string. It can provide electrical isolation of each rack auxiliary supply feeder with low voltage (LV) transformers. It is also possible to provide redundant local auxiliary power supply sources, preferably with means of quality adjustments for auxiliary power transfer from rack to rack. The circuit design can mitigate the risk of auxiliary supply failure.

In some embodiments isolation between low voltage grid and ESS string level auxiliary feeder is provided by a transformer with a ratio of about 1:1 and an isolation level between primary and secondary windings that is not lower than ESS string voltage (typically tens or few hundreds of kilovolts). In some embodiments the secondary winding of the transformer provides an HV isolated auxiliary feeder that is connected to the middle point of the string auxiliary supply. Thus, auxiliary power can be distributed towards the ESS string positive pole and negative pole in two directions. In some embodiments each ESS rack has a transformer with two functions. Providing local isolated auxiliary power and transmitting auxiliary power to the next rack in the string.

In some embodiments electrical isolation of every low voltage rack auxiliary feeder is provided with a low voltage transformer that may have a ratio of about 1:1. In some embodiments the transformer consists of three isolated windings W1, W2, and W3. Windings W1 and W2 can be used for auxiliary power transfer from rack to rack. Windings W1 and W2 preferably have high power ratings (typically a few kilowatts) to convey power to the auxiliary circuits of half of the racks in the string. To compensate for the voltage drop in cables and wires of rack-to-rack auxiliary feeder, the transformer windings W1 can be provided with adjustment taps. This allows to boost the auxiliary voltage. Winding W3 can feed a single rack auxiliary circuit. Winding W3 can have a special design with a low power rating (a few tens of watts) that is enough to feed the rack and thus can have a low level of winding short circuit power.

In case of a fault (short circuit in a single rack auxiliary circuit, for example) the transformer core is not full saturated. As a result, the transmission of auxiliary power between windings W1 and W2 can remain functional and the rest of the racks further down in the string are still provided with auxiliary power.

Preferably, the auxiliary circuit is electrically referenced in every rack, thus the electrical potential of the auxiliary circuit is not floating and does not pose a risk for low voltage insulation in every rack. Transformer windings W2 and W3 can be referenced to the same rack frame. Winding W1 remains isolated and is preferably referenced to a frame of the next rack further down the string. This configuration can achieve an electrical isolation between each rack auxiliary feeder.

The intended high voltage ESS application imposes high availability requirements. Thus, the risk of auxiliary supply failure are mitigated by additional (redundant) auxiliary power sources.

The auxiliary power feeding from a low voltage grid can be improved through multiple transformers (by means of redundancy and availability) with the use of self-supply from an energy storage circuit in the respective ESS rack. The auxiliary self-supply circuit in the rack preferably takes power from rack energy storage components, converts this power by means of a DC/DC converter to a stable low voltage, and subsequently feeds the local controls through a reverse biased diode. The diode prevents current going from one auxiliary power source to another. The second auxiliary power source is the transformer which feeds an AC/DC converter (rectifier) providing the same stable low voltage for local controls.

The benefit of this variant is that self-supply with the DC/DC converter can be designed to a full rate of rack auxiliary circuit power, but the transformer and the AC/DC converter can be designed with low power ratings to feed the rack auxiliary circuit. Preferably, the AC/DC converter supplies the local controls only in case the energy storage is fully discharged (e.g., due to maintenance or some fault) to provide service mode for auxiliary circuit. This improves the redundancy of the system and also decreases cost of the auxiliary supply.

Another option for a combined redundant auxiliary supply is using an additional photovoltaic generating circuit in a rack. In a typical application, the light system in the ESS hall provides enough constant brightness that the compact photovoltaic (PV) panel on the rack can produce enough power for a single rack auxiliary circuit. PV panel power is converted into stable low voltage preferably with the an MPPT converter. The benefit of that combination is that PV-based auxiliary sources can be built with cheap components that are widely available. Also, transformer-based auxiliary supply circuits can be designed at a low cost to provide only service-level auxiliary power in case of a fault with photovoltaic power.

Embodiments of the invention are described in more detail with reference to the accompanying schematic drawings that are listed below.
Fig. 1 depicts an embodiment of a high-voltage DC system, e.g., in a substation;
Fig. 2 depicts an embodiment of an energy storage system for STATCOM in the HVDC system of Fig. 2;
Fig. 3 depicts a more detailed view of energy storage racks;
Fig. 4 depicts an embodiment of an energy storage rack; and
Fig. 5 depicts another embodiment of an energy storage rack.

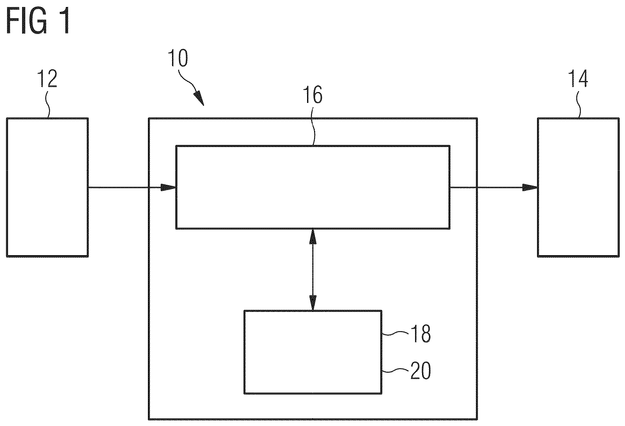

Referring to Fig. 1 a substation 10 is depicted. The substation 10 The substation 10 may be connected to a high-voltage (HV) grid 12 and may serve as a transmission substation or a distribution substation, in order to, for example supply one or more consumers 14. Examples for the consumers 14 include, but are not limited to data centers, factories, homes, etc.

The substation 10 includes a transformation and/or distribution portion 16, which generally known per se and thus not further described. The substation 10 further includes static synchronous compensator (STATCOM) 18 that is electrically connected to the output grid 13 for compensating load peaks, for example.

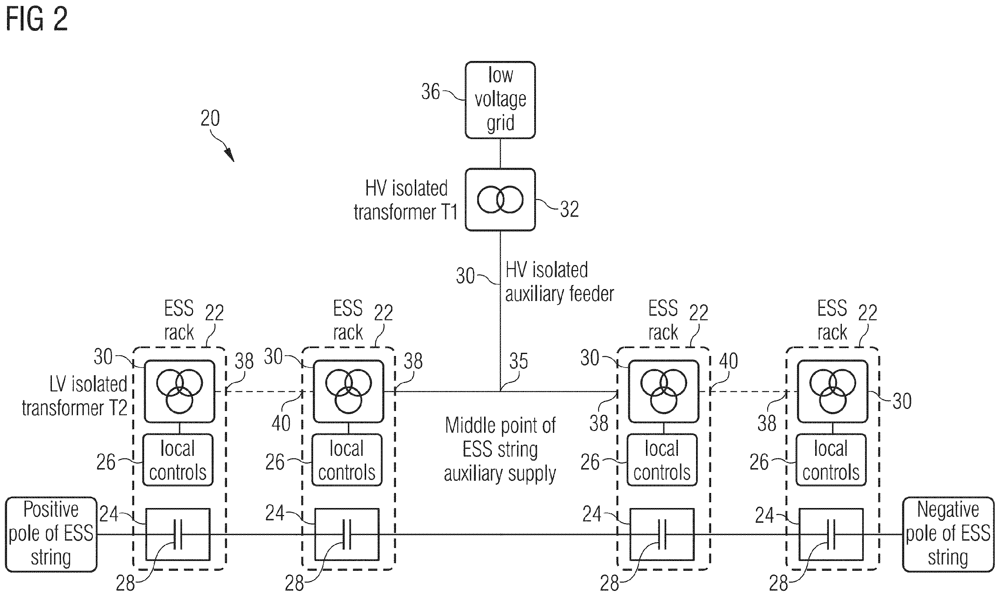

Referring to Fig. 2 an energy storage system (ESS) 20 is depicted in more detail. The ESS 20 stores electrical energy that forms part of the STATCOM 18. The ESS 20 includes a plurality of energy storage racks (ESS racks) 22. Each ESS rack 22 includes an energy storage 24, a control unit 26 and an auxiliary power supply 30. The energy storage 24 includes a plurality of energy storage cells 28, e.g., super capacitors. The energy storages 24 of the different ESS racks 22 are connected in series to form a string and are electrically connected to an HVDC circuit to be able to supply electrical power if needed or to be charged when possible.

The control unit 26 controls the operation of each ESS rack 22 and specifically the energy storages 24. The control unit 26 can be connected to a higher level system control unit (not shown for sake of brevity) that operates the entire ESS 20.

The auxiliary power supply 30 of each ESS rack 22 is also connected to the auxiliary power supply 30 of the neighboring ESS racks 22.

The ESS 20 comprises a supply transformer 32 and preferably an auxiliary feeder 34 that electrically connects to a middle point 35 of the ESS racks 22. The supply transformer 32 and the auxiliary feeder 34 are high-voltage (HV) isolated. The supply transformer 32 is electrically connected to a low voltage grid 36 which may or may not be part of the ESS 20.

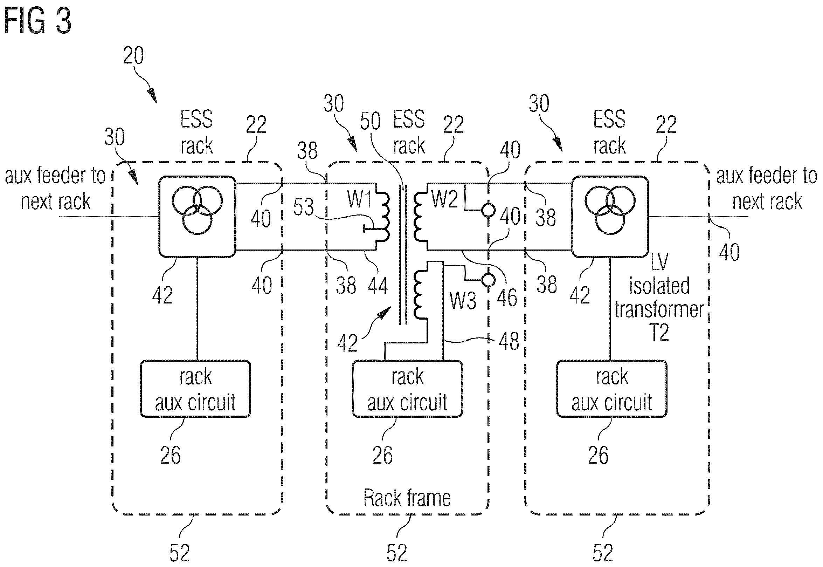

Referring to Fig. 2 and Fig. 3 the ESS racks 22 are explained further. Each auxiliary power supply 30 includes input terminals 38 and transfer terminals 40. The input terminals 38 can be connected to transfer terminals 40 of another ESS rack 22 or to the auxiliary feeder 34.

As depicted in Fig. 3, the auxiliary power supply 30 includes a low-voltage (LV) transformer 42. The LV transformer 42, as well as the other components of each ESS rack 22 are LV isolated. The LV transformer 42 comprises an input branch 44, a transfer branch 46 and a supply branch 48.

The input branch 40 is connected to the input terminals 38 and has a primary winding W1. The primary winding W1 is electrically insulated from an ESS rack frame. The primary winding W1 may have an adjustable tap 53 that allows setting the transformer ratio of the LV transformer 42.

The transfer branch 42 is connected to the transfer terminals 40 and has a secondary winding W2. The primary winding W1 and the secondary winding W2 are inductively coupled, preferably via a transformer core 50. The secondary winding W2 is electrically connected to the ESS rack frame as a potential reference.

The supply branch 48 has a supply winding W3. The supply winding W3 is inductively coupled at least to the secondary winding W2. The supply winding W3 is electrically connected to the ESS rack frame to have the same reference potential. This allows for a comparatively simple LV isolation of the ESS rack 22. However, a HV isolation may still be needed with reference to ground potential. The supply winding W3 taps of electrical energy from the other windings and is electrically connected to the control unit 26 to supply it with electrical power.

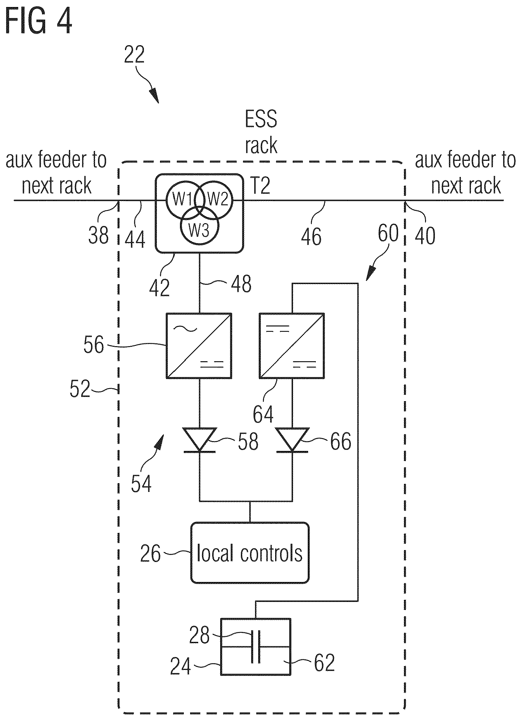

Referring to Fig. 4, an embodiment of the ESS rack 22 is described in more detail. The auxiliary power supply 30 includes an AC power supply branch 54. The AC power supply branch 54 has the LV transformer 42.

Furthermore, the AC power supply branch 54 includes an AC-DC converter 56 for rectifying the AC voltage that was transformed by the LV transformer 42. This may generate the typical DC voltage used in electronic control units, such as extra low voltage (ELV). The AC-DC converter 56 can be an active or a passive rectifier and may also include some voltage regulation or stabilization, as the case may be. The AC-DC converter 56 is electrically connected to the LV transformer 42 via the supply branch 48.

The AC power supply branch 54 may include a blocking element 58, e.g., a diode. The blocking element 58 is arranged between the AC-DC converter 56 and the control unit 26. The blocking element 58 is arranged such that current can only flow from the AC-DC converter 56 towards the control unit 26, but not in reverse.

The auxiliary power supply 30 includes a DC power supply branch 60. The DC power supply branch 60 has an LV DC power source 62. As shown in Fig. 4, the LV DC power source 62 is formed by the energy storage 24 of the ESS rack 22 in this embodiment. In a variant only part of the energy storage 24 is used. The energy storage 24 serves the purposes of providing energy for the STATCOM 18 and for the control unit 26 in case of a fault condition or maintenance, as required.

The DC power supply branch 60 may further include a DC-DC converter 64. The DC-DC converter 64 is configured to convert the voltage of the LV DC power source 62 to the voltage used by the control unit 26 to supply thereto.

The DC power supply branch 60 further includes a blocking element 66, e.g., a diode, that is arranged between the DC-DC converter 64 and the control unit 26. The blocking element 66 is arranged to prevent current from flowing from the control unit 26 back to the DC-DC converter 64.

Both the AC power supply branch 54 and the DC power supply branch 60 are combined to supply the control unit 26. The blocking elements 58 and 66 prevent current from flowing from the AC power supply branch 54 to the DC power supply branch 60 and vice versa.

The control unit 26 includes a power supply controller that is able to switch between the power supply branches 54, 60, if necessary. It should be noted that both power supply branches 54, 60 may supply electrical power to the control unit simultaneously.

The auxiliary power supply 30, while only described with one AC power supply branch 54 and one DC power supply branch 60 may instead include multiple AC power supply branches 54 and/or DC power supply branches 60, that can have any of the previously described configurations. Preferably, if multiple power supply branches 54, 60 are present the power supply branches 54, 60 are mutually independent. In other words, a failure in one of the branches 54, 60 does not affect the other power supply branches 54, 60.

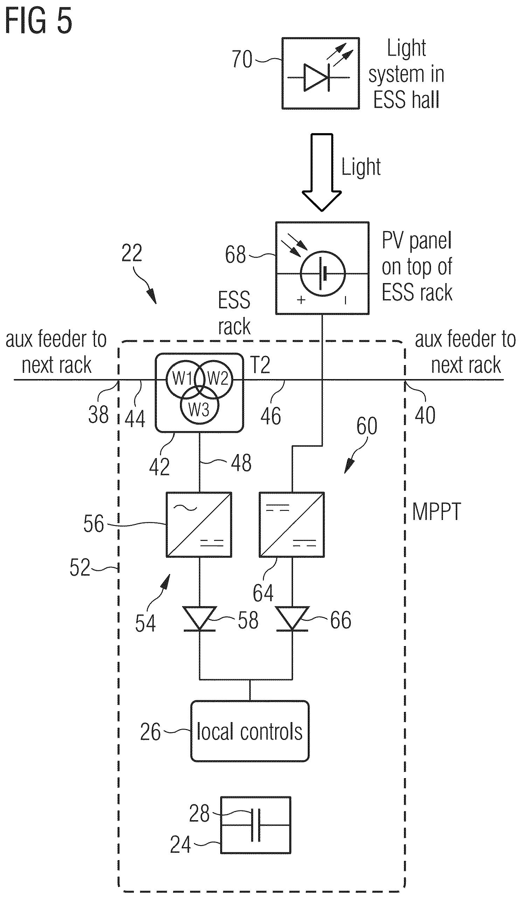

Referring to Fig. 5, another embodiment of the ESS rack 22 is described in more detail insofar as it differs from the previously described embodiment. The LV DC power supply 62 is configured as one or more photovoltaic (PV) modules 68. The PV modules 68 are mounted on top of the ESS rack 22, preferably on the ESS rack frame. The PV modules 68 preferably face upward. As depicted here, the lighting system 70 of the ESS hall provides sufficient illumination for the PV modules 68 to generate electrical power.

In a variant that is not shown, it is also possible for the PV modules 68 to be separate from the ESS rack 22 and mounted outside. Another variant uses a DC generator, e.g., driven by a combustion engine, as the DC power supply 62. Furthermore, it should be noted that the different types of DC power supply branches 60 as described herein may be combined to even further increase redundancy.

### List of reference signs:

- 10: substation
- 12: high-voltage (HV) grid
- 14: consumer
- 16: transformation/distribution portion
- 18: static synchronous compensator (STATCOM)
- 20: energy storage system (ESS)
- 22: ESS rack
- 24: energy storage
- 26: control unit
- 28: energy storage cells
- 30: auxiliary power supply
- 32: supply transformer
- 34: auxiliary feeder
- 35: middle point
- 36: low voltage grid
- 38: input terminals
- 40: transfer terminals
- 42: low-voltage (LV) transformer
- 44: input branch
- 46: transfer branch
- 48: supply branch
- 50: transformer core
- 52: ESS rack frame
- 53: adjustable tap
- 54: AC power supply branch
- 56: AC-DC converter
- 58: blocking element
- 60: DC power supply branch
- 62: LV DC power source
- 64: DC-DC converter
- 66: blocking element
- 68: photovoltaic (PV) module
- 70: lighting system

- W1: primary winding
- W2: secondary winding
- W3: supply winding

## Claims

1. An auxiliary power supply (30) for an energy storage rack (22) of a high-voltage DC (HVDC) system, the power supply comprising:
- at least one AC power supply branch (54) that includes input terminals (38), transfer terminals (40) and a low voltage (LV) transformer (42), wherein the LV transformer (42) has an input branch (44) that is configured for receiving AC electrical power from the input terminals (38), the LV transformer (42) has a transfer branch (46) that is configured for transferring the AC electrical power to the transfer terminals (40), and the LV transformer (42) has a supply branch (48) that is configured for transforming the received AC electrical power to a lower voltage in extra low voltage (ELV) range for supplying a control unit (26);
- at least one DC power supply branch (60) that includes an LV DC power source (62) that is configured for supplying DC electrical power to the control unit (26).

2. The auxiliary power supply (30) of claim 1, further comprising a power supply controller that is configured for switching between each AC power supply branch (54) and each DC power supply branch (60) in response to receiving a control signal.

3. The auxiliary power supply (30) of any of the preceding claims, wherein the AC power supply branch (54) includes a blocking element (58) that prevents electrical current from flowing from any of the AC and LV power supply branches into the respective AC power supply branch (54); and/or
wherein the DC power supply branch (60) includes a blocking element (66) that prevents electrical current from flowing from any of the AC and DC power supply branches into the respective LV power supply branch; and/or wherein the blocking element (58, 66) includes a diode.

4. The auxiliary power supply (30) of any of the preceding claims, wherein the LV transformer (42) includes a primary winding (W1) and a secondary winding (W2) that are inductively coupled to each other such that one of the primary winding (W1) and the secondary winding (W2) is part of the input branch (44) and the other of the primary winding (W1) and the secondary winding (W2) is part of the transfer branch (46) and wherein the LV transformer (42) includes a supply winding (W3) that is part of the supply branch (48) and inductively coupled to the primary winding (W1) and/or the secondary winding (W2), and the supply winding (W3) is configured for transforming the AC electrical power received from the primary and/or secondary windings (W1, W2) to a lower voltage that is suitable for supplying a control unit (26) with DC electrical power in ELV range.

5. The auxiliary power supply (30) of any of the preceding claims, wherein
- the supply branch (48) is referenced to the same potential as either the input branch (44) or the transfer branch (46); and/or
- either the input branch (44) is galvanically isolated from the transfer branch (46) and the supply branch (48) or wherein the transfer branch (46) is galvanically isolated from the input branch (44) and the supply branch (48).

6. The auxiliary power supply (30) of any of the preceding claims, wherein the AC power supply branch (54) includes an AC-DC converter (56) that is electrically connected to the LV transformer (42) to generate DC electrical power to supply the control unit (26) and that is optionally electrically connected to the supply winding (W3).

7. The auxiliary power supply (30) of any of the preceding claims, wherein the DC power supply branch (60) includes a DC-DC converter (64) that is electrically coupled to the LV DC power source (62), that includes an energy storage (24) and/or a DC power generator, which may be a photovoltaic module, to generate DC electrical power to supply the control unit (26).

8. The auxiliary power supply (30) of any of the preceding claims, wherein the input branch (44) and the transfer branch (46) are cooperatively configured to generate a voltage increase of the AC electric power, so as to compensate a voltage drop occurring due to electrical losses, and wherein any of the input branch (44) and the transfer branch (46) are configured for adjusting the voltage increase.

9. An energy storage rack (22) for a HVDC system, the energy storage rack (22) comprising:
- an auxiliary power supply (30) according to any of the preceding claims;
- an energy storage (24) configured for storing electrical energy; and
- a control unit (26) configured for controlling operation of the energy storage (24),
wherein the AC power supply branch (54) and the DC power supply branch (60) are electrically connected to the control unit (26) to supply electrical power.

10. The energy storage rack (22) of claim 9, wherein
- the power supply controller is part of the control unit (26); and
- the LV DC power source includes the energy storage (24).

11. The energy storage rack (22) of the claims 9 and 10, wherein each blocking element (58, 66) is arranged between the LV transformer (42), preferably the AC-DC converter (56), and the control unit (26), and wherein each blocking element (66) is arranged between the DC power source, preferably the DC-DC converter (64), and the control unit (26).

12. The energy storage rack (22) of any of the claims 9 to 11, wherein the supply branch (48) is electrically connected to the control unit (26), preferably via the AC-DC converter (56).

13. The energy storage rack (22) of any of the claims 9 to 12, further comprises a frame and/or housing made of electrically conductive material and the supply branch (48) is referenced to the same potential as either the input branch (44) or the transfer branch (46) via the frame and/or housing.

14. An energy storage system (20) for a high-voltage DC circuit, comprising:
- a supply transformer (32); and
- a plurality of energy storage racks (22) according to any of the claims 9 to 13, whose energy storages (24) are connected in series to collectively form an HVDC energy storage, wherein the auxiliary power supplies (30) are electrically connected in series.

15. The energy storage system (20) of claim 14, wherein at least one of the energy storage racks (22) is directly electrically connected to the supply transformer (32) via its input terminals (38) and to one other energy storage rack (22) via its transfer terminals (40), and wherein at least one of the energy storage racks (22) is electrically connected via its transfer terminals (40) to the input terminals (38) of one other energy storage rack (22).
